# EUROPEAN PATENT APPLICATION

(11) **EP 1 815 748 A1**
(43) Date of publication of application: **08.08.2007**
(21) Application number: 07101736.2
(22) Date of filing: 05.02.2007
(51) Int. Cl.: A23C 13/12

(54) **Process for making a thickened cream product**

(30) Priority: 03.02.2006 NL 1031069
(71) Applicant: Campina Nederland Holding B.V., 5301 LB Zaltbommel (NL)
(72) Inventor: Meijer, Harm Jan, 4147 GR, Asperen (NL)
(74) Representative: Swinkels, Bart Willem

(57) **Abstract**

The invention relates to a process for manufacturing a thickened sterilised cream product in which cream is mixed with a thickener. The thickener is added to the cream together with a fat which is liquid at a temperature at which the process is carried out, and in which the thickener is not soluble. By introducing the thickener, for example sodium alginate, together with a liquid, preferably vegetable, fat, a very homogeneous distribution of the alginate through the cream is obtained and lumping is avoided.

## Description

The invention relates to a process for producing a thickened cream product in comprising mixing cream with a thickener. The invention also relates to a cream product which can be obtained in this way.

Such a process is known from US-A 4,888,194, which describes how a thickener, such as sodium alginate, is mixed with cream to create a thickened cream product, where the mixing with alginate is preceded by heating and is followed by ultrahigh-temperature treatment, cooling and homogenisation.

Thus, the thickener is mixed with the cream, i.e. an emulsion of milk fat in water, where water is the continuous phase, and in this process lumping may occur.

The sodium alginate that is usually used is soluble in water; reaction of sodium alginate with the calcium ions present in the cream leads to the insoluble calcium alginate, as a result of which said lumping is facilitated.

One of the examples of US 4,888,194 describes how the alginate and an emulsifier are mixed in approximately 15% of the cream and the mixture so obtained is mixed with the rest of the cream. The use of the combination with thickeners (sodium alginate, carob meal, modified starch) is also encountered in sterilised cream products that are commercially available. In such products, the emulsifiers serve among other things to remedy the dissolution problems. Even with such a process, however, the risk of lumping is still present.

The applicant has searched for a solution to these problems and has developed a process and a product in which these problems are removed.

According to the invention, the process of the stated type is characterised in that the thickener is mixed with a fat of food quality which is liquid at the temperature at which the process is carried out, and in which the thickener is not soluble, and the mixture of fat and thickener so obtained is mixed with the cream, creating the desired thickened cream product. It was in fact found that when the thickener is added to the cream in the form of a dispersion in a liquid fat, the change of the thickener from the fat phase to the aqueous phase of the cream takes place extremely gradually and lumping is avoided.

The thickened cream product obtained is completely free of lumps and can directly be packaged without any processing for the removal thereof being necessary.

The thickener is expediently chosen from hydrocolloids having a high content of anionic groups. In particular these are polysaccharides having at least 1 anionic group, such as carboxylate or sulphate, per 5 monosaccharide units, more preferably at least 1 anionic group per 2.5 monosaccharide units. Suitable examples thereof are carrageenan and alginate, thickeners which can usually be permitted in foods. Anionically modified polysaccharides, such as carboxymethyl starch, and modified (demethylated) pectins are also applicable from a technical point of view. Combinations of anionic thickeners are also possible.

In particular the thickener is a sodium alginate having a highly viscous action. Sodium alginates from various suppliers (ISP, FMC, Danisco) are applicable for the purpose of the invention. Apart from sodium alginate, potassium or ammonium alginate can also be used, while other alginates soluble in water are also conceivable.

The amount of this anionic thickener relative to the final cream is preferably 0.05-1.0 wt%, in particular 0.1-0.5 wt%. Relative to the total fat in the final product the amount of anionic thickener is preferably 0.2-5.0 wt%, in particular 0.5-2.5 wt%.

With regard to the fat, a wide choice is possible, as long as the fat is of food quality. One can think of milk fat, fractionated milk fat and vegetable fat, although the choice is not limited thereto.

In an attractive embodiment the fat in the final cream product is a mixture of milk fat and vegetable fat, wherein the percentage of vegetable fat varies between 0.5 and 8 wt% and preferably between 1.0 and 3.0 wt% of the cream product for reasons relating to flavour. The amount of vegetable fat is preferably 2 to 50 wt%, more preferably 4 to 25 wt%, most preferably 7.5 to 15 wt%, relative to the total fat in the final cream product.

A fat containing at least 40% C-16 and shorter fatty acids is preferably used as the vegetable fat. Examples are palm kernel fat, coconut fat and palm oil. If necessary for good processability, for example in the case of palm oil, these fats are wholly or partially hardened, for example to an unsaturated fatty acids content of less than 25%. The percentage of trans-fatty acids is preferably lower than 1 wt%.

The hardened vegetable fats often contain a certain percentage of mono- and diglycerides. In addition to or instead of these, however, mono- and/or diglycerides, for example based on soya, rapeseed, palm, coconut or animal fat, further modified if desired by for example acetyl, lactyl, diacetyltartroyl or other groups, can be used in order to obtain a product with a smooth structure. The viscosity of the cream can likewise be increased by the use of stabilisers such as carob meal, modified starch and the like. However, the use of such stabilisers, unlike the abovementioned anionic thickener, is not necessary.

Although the vegetable fat or a part thereof may already be present in the cream prior to the addition of the thickener, it is preferable to use the vegetable fat as the fat in which the thickener is dispersed and to add it to the cream in this way. In a particular embodiment the vegetable fat is exclusively added with the thickener.

The fat in which the thickener is dispersed is therefore preferably a vegetable fat as defined above. Instead of or in addition to the vegetable fat, however, an animal fat can also be used, such as butter oil, with especial reference to butter oil of high quality called "anhydrous milkfat".

The thickener and the fat can be mixed with each other within wide limits, such as for example thickener:fat in the range from 1:30 to 1:1, in particular 1:15 to 1:2, for example 1:10 to 1:5, on the basis of weight. The mixing takes place at a temperature at which the fat is liquid, which, depending on the fat, can be a temperature of for example 40-90°C. In the case of coconut fat, palm kernel oil and hardened palm oil, the mixing is preferably carried out at a temperature of 60 to 80°C, advantageously using a homogeniser, for example of the Manton Gaulin APV type, preferably with exclusion of air. A pressure of for example 10-50 MPa can be used in this operation.

According to a preferred embodiment the thickener is sodium alginate and the fat hardened palm oil (melting point 36-39°C), while the ratio of alginate to hardened palm oil is approximately 1:8. Such a mixture can be kept at room temperature and, depending on the choice of fat, oxidation can if necessary be prevented by gassing with nitrogen or by addition of antioxidants such as tocopherols.

Cream generally has a fat content of about 40%. For applications such as the present one, the cream will often be standardised to a fat content of 15 to 25%, while the amount of thickener such as sodium alginate is for example 0.1-1.0 wt%, based on the weight of the standardised cream. Starting from cream with a (milk) fat content of 40% this is generally first pasteurised (e.g. 20 sec at 78°C), after which the cream is standardised to for example 18-24%, in particular 19-23% fat, with the aid of thermised milk. In order to improve the heat stability of the cream, the pH can be adjusted and stabilisation salts such as citrates can be used (Walstra et al., Dairy Technology p. 405-410, Marcel Dekker; 1999). Taking into account the nature of the raw material, trial sterilisations are desirable, with the aim of achieving a pH of 6.6-7.0 after sterilisation.

In an attractive embodiment of the process the cream standardised to approximately 20-22% fat is preheated, UHT-treated and brought to about 80°C, after which the dispersion of the thickener (alginate) in the vegetable oil and/or butter oil is blended in. This can advantageously be done by slowly blending into the vortex of the cream at 60-80°C. The thickened cream so obtained is then homogenised and put into containers such as cans or bottles and the like, after which the filled containers are closed, and the whole is then sterilised and cooled to ambient temperature.

In the process described above, the preheating of the standardised cream can take place at 80-95°C for 20-30 sec, and the mixing with the alginate dispersion at about 70-85°C, after which the thickened cream can be homogenised at 23-27 MPa and the containers which have been filled with thickened standardised cream and closed can be sterilised at 118-125°C for 10-25 min. This is followed by cooling to 15-30°C.

The process described above is preferably carried out in such a way that the preheating takes place at 90°C for 30 sec and the homogenisation of the thickened cream takes place at 25 MPa and 80°C, sterilisation of the containers which have been filled with thickened cream and closed takes place at 119°C for 20 min, and the filled containers are cooled to 25°C.

After addition of the dispersion of thickener in fat, the total fat content of the cream product is for example 16-30 wt%, preferably 18-27 wt%, more preferably 20-25 wt% and in particular approximately 23 wt% (22-24 wt%).

The thickened cream according to the invention has a firm structure, which is apparent *inter alia* from the demouldability and the firmness measurements at 20°C and 30°C. In particular, a shaped amount of cream product, for example the 170 g cylindrical contents of a can, turned out onto a plate or dish, remains standing without deformation, i.e. this shaped amount subsides by less than 5% of the height at 20°C during at least half an hour. The viscosity of the cream product, measured with the Stevens Texture Analyser (STA), is preferably at least 90 g at 20°C, more preferably at least 110 g at 20°C.

The cream which can be obtained with the process according to the invention can be used for any purpose where cream for consumption is desired, for example consumption with bread as is customary in certain countries, as coffee cream, on pastry and desserts and the like. The shelf life of the packaged cream is very good, i.e. longer than a year, or even 18 months (F₀ value greater than 6). If desired, further components can be added to the cream at any stage of production, such as flavourings and colourants, or the cream, whether or not layer by layer or more homogeneously, can be mixed with custard or sauces (fruit, chocolate etc.) or with small pieces of fruit, madeira cake, nuts, chocolate and the like.

### EXAMPLE

Incoming farm milk was skimmed with the aid of a centrifuge, giving cream with a fat content of about 40%. The cream was pasteurised for 20 sec at 78°C, after which the cream was brought to 21% fat by standardisation. On the basis of a trial sterilisation a quantity of stabilisation salts was added such that a final pH of 6.8 was attained, after which in the industrial process pasteurisation to 90°C for 30 sec took place.

A mixture of sodium alginate (ISP - Girvan, GB) and hardened palm oil (melting point 36-39°C; Cargill Rotterdam-Botlek NL, type 37), with a ratio by weight of alginate to palm oil of 1:8, had been prepared beforehand and was added to the cream, which had been standardised and cooled to 80°C, in a quantity of 22.5 g per kg of standardised cream.

The standardised cream so obtained, thickened with alginate, was homogenised at 25 MPa and put into cans; the cans were closed and the filled closed cans were sterilised for 20 minutes at 119°C, after which cooling to approximately 25°C took place.

The standardised cream so formed, thickened to some extent, is free of lumps and is eminently suitable for consumption with bread or as coffee cream, for example. The shelf life of the packaged cream is longer than a year.

With the aid of the Stevens Texture Analyser the viscosity of the cream was measured under the following conditions: transparent flat cylinder (diameter 38 mm, height 22 mm), the initial distance from the measuring body to the surface of the cream in the canister (height 51.5 mm, diameter 73 mm, 170 g of cream) is 18 mm and the velocity is 2 mm/sec. The STA value is the resistance after penetration of the measuring body into the cream after a distance of 18 mm, expressed in grams. The measurement is terminated in the normal position (top of the cylinder is level with the surface of the cream).

After 48 hours of storage at 20°C: 137 g STA (90-170) measured at 20°C

After 2 months of storage at 20°C: 170 g STA measured at 20°C

As is apparent from the above figures, the product thickens further during storage. A characteristic feature of the cream is that after turning out from the canister the imprint of the canister is clearly visible in the cream and remains so. The separation of serum is always sufficient to ensure that the cream can be turned out nicely.

## Claims

1. A process for producing a thickened cream product comprising mixing cream with a thickener, **characterised in that** the thickener is mixed with a fat which is liquid at the temperature at which the process is carried out, and in which the thickener is not soluble, and the mixture of fat and thickener so obtained is mixed with the cream, creating the desired thickened cream product.

2. A proces according to Claim 1, **characterised in that** the thickener is an anionic polysaccharide.

3. A process according to Claim 1 or 2, **characterised in that** the thickener is an alginate, in particular sodium alginate.

4. A process according to any one of Claims 1-3, **characterised in that** the thickener is used in an amount of 0.05-1.0 wt% relative to the thickened cream product.

5. A process according to any one of Claims 1-4, **characterised in that** the fat with which the thickener is mixed is milk fat, fractionated milk fat or a vegetable fat.

6. A process according to Claim 5, **characterised in that** the fat is a vegetable fat containing at least 40% C-16 and shorter fatty acids, such as coconut fat, palm kernel fat or palm oil.

7. A process according to any one of Claims 1-6, **characterised in that** the fat with which the thickener is mixed is used in an amount of 0.5-8 wt% relative to the thickened cream product.

8. A process according to any one of Claims 1-7, **characterised in that** the thickener and the fat are mixed in a ratio by weight of 1:15 to 1:2.

9. A process according to any one of Claims 1-8, **characterised in that** prior to the addition of the mixture of thickener and fat the cream is standardised to a fat content of 15-25 wt%.

10. A process according to any one of Claims 1-9, **characterised in that** prior to the addition of the mixture of thickener and fat the cream is preheated to 80-95°C, and the thickened cream product obtained is sterilised.

11. A thickened sterilised cream product which has a fat content of 18-27 wt%, where 4-25 wt% of the fat is vegetable fat and 75-96 wt% is milk fat, and which furthermore contains 0.05-1 wt% relative to the cream product of one or more polysaccharides having at least 1 anionic group per 5 monosaccharide units as thickener, and which has a viscosity of at least 90 g STA at 20°C.

12. A cream product according to Claim 11 which has a fat content of 20-25 wt%, wherein 7.5-15 wt% of the fat is vegetable fat and 85-92.5 wt% is milk fat, and which furthermore contains 0.1-0.5 wt% of alginate.
